# EUROPÄISCHE PATENTANMELDUNG

(11) **EP 2 026 437 A1**
(43) Veröffentlichungstag der Anmeldung: **18.02.2009**
(21) Anmeldenummer: 08014283.9
(22) Anmeldetag: 11.08.2008
(51) Int. Cl.: H02G 11/00

(54) **Energieführungskettenanordnung**

(30) Priorität: 15.08.2007 DE 102007038679
(71) Anmelder: FLEXATEC GmbH, 63456 Hanau (DE)
(72) Erfinder: Steinmüller, Volker, 63579 Freigericht (DE); Vujic, Nasser, 64546 Mörfelden-Walldorf (DE)
(74) Vertreter: Grimm, Ekkehard

(57) **Zusammenfassung**

Die Erfindung betrifft eine Eriergieführungskettenanordnung zur Aufnahme und Führung von flexiblen Leitungen von einem Festanschlusspunkt zu einem beweglichen oder verfahrbaren Abnehmer hin, mit einzelnen gelenkig miteinander verbundenen, eine Führungskette bildenden Kettengliedern, wobei die Kettenglieder jeweils zwei seitliche Laschenteile aufweisen und derart zueinander verschwenkbar sind, dass das eine mit dem Abnehmer verbundene Ende der Führungskette umlegbar ist und zurück in Richtung des Festanschlusspunkts, einen Obertrum darstellend, oberhalb des ruhenden, mit dem Festanschlusspunkt verbundenen Teils der Führungskette, der einen Untertrum darstellt, läuft, und mit einer rinnenartigen Führung, die den Obertrum oberhalb des Untertrums seitlich stützt, und dass der Obertrum dann, wenn er über das Ende der Führungskette in Richtung des Festanschlusspunkts hinausläuft, auf Laufrollen, die den Seitenwänden der rinnenartigen Führung zugeordnet sind, getragen wird, die dadurch gekennzeichnet ist, dass die Laufrollen mit ihren Achsen beidseitig in mindestens einer im Querschnitt U-förmigen Trägerschiene gelagert sind, die Laufrollen einen Durchmesser aufweisen, der kleiner ist als der Abstand benachbarter Schwenkachsen der Kettenglieder, und dass der Abstand der Achsen aufeinander folgender Laufrollen kleiner ist als der Abstand benachbarter Schwenkachsen der Kettenglieder.

## Beschreibung

Die Erfindung betrifft eine Energieführungskettenanordnung zur Aufnahme und Führung von flexiblen Leitungen von einem Festanschlusspunkt zu einem beweglichen oder verfahrbaren Abnehmer hin, mit einzelnen gelenkig miteinander verbundenen, eine Führungskette bildenden Kettengliedern, wobei die Kettenglieder jeweils zwei seitliche Laschenteile aufweisen und derart zueinander verschwenkbar sind, dass das eine mit dem Abnehmer verbundene Ende der Führungskette umlegbar ist und zurück in Richtung des Festanschlusspunkts, einen Obertrum darstellend, oberhalb des ruhenden, mit dem Festanschlusspunkt verbundenen Teils der Führungskette, der einen Untertrum darstellt, läuft, und mit einer rinnenartigen Führung, die den Obertrum oberhalb des Untertrums seitlich stützt, und dass der Obertrum dann, wenn er über das Ende der Führungskette in Richtung des Festanschlusspunkts hinausläuft, auf Laufrollen, die den Seitenwänden der rinnenartigen Führung zugeordnet sind, getragen wird.

Solche Führungsrinnenanordnungen dienen dazu, Energieführungsketten, die dazu eingesetzt werden, flexible Leitungen aller Art zu schützen, in einer definierten Orientierung zu führen. Diese Energieführungsketten legen sich zwischen die Seitenwände solcher Führungsrinnen ein. Wenn sich der Abnehmer, mit dem das verfahrbare Ende der Energieführungskette verbunden ist, an seiner am weitesten von dem Anschlusspunkt entfernten Stelle befindet und wieder zurück zu dem Anschlusspunkt verfährt, legt sich die Energieführungskette um und führt oberhalb des dann unten liegenden Teils der Führungskette, auch als Untertrum bezeichnet, zurück (wobei dieser sich umlegende und zurückführende Teil der Energieführungskette als Obertrum bezeichnet wird). Um den Obertrum oberhalb des Untertrums gleiten zu lassen, ohne dabei Abnutzungen an den zugewandten Flächen von Untertrum und Obertrum hervorzurufen, sind entsprechende Gleitteile vorgesehen, die entweder in der Energieführungskette integriert sein können oder Teil der stationären Führungsrinne sind. In dem Bereich der Führungsrinne, in dem der Obertrum über das Ende des Untertrums hinaus läuft, sind üblicherweise seitlich entlang der Führungsrinne Gleitschienen vorgesehen, auf denen dann der Obertrum, der zuvor auf dem Untertrum gleitend geführt wurde, entlang gleitet. Um die Reibung zwischen Obertrum und diesen Gleitschienen noch weiter zu verringern, ist bereits vorgeschlagen worden, entlang der Führungsrinne Rollen vorzusehen, auf denen eine Energieführungskette rollend geführt wird. Eine solche Führungsrinne mit seitlich angeordneten Rollen ist aus der DE 299 10 840 U1 bekannt. Bei der in dieser Druckschrift gezeigten Anordnung sind die Rollen an deren Achsen einseitig aufgehängt. In Laufrichtung der Energieführungskette gesehen weisen die Rollen einen Abstand zueinander auf, der etwa der Länge von annähernd 4 Kettengliedern entspricht.

Solche Rinnen müssen den jeweiligen Energieführungsketten sowohl in Bezug auf die Querschnittsdimensionen, d. h. Breite und Höhe der Kettenglieder, als auch der Länge angepasst werden. Anordnungen, wie sie vorstehend beschrieben sind, können für sehr lange Verfahrwege ausgelegt sein, die 250 m und mehr betragen können. Falls Gleitteile eingesetzt werden, so müssen diese exakt an den Aufbau der Kette bzw. der Kettenglieder angepasst werden. Falls Rollen eingesetzt werden, um den Obertrum der Führungskette entlang der Rinne zu tragen, ergibt sich bei den bisherigen Lösungen das Problem, dass kein ruhiger Lauf gewährleistet ist, da insbesondere zwischen benachbarten Kettengliedern Lücken vorhanden sind, so dass die Kette nicht in einer geraden Linie bzw. einer Ebene durch diese Rollen abgestützt wird.

Der vorliegenden Erfindung liegt die Aufgabe zugrunde, eine Energieführungskettenanordnung der eingangs genannten Art, d. h. eine solche, die entlang der Führungsrinne Rollen einsetzt, derart auszugestalten, dass trotz dieser Rollen ein ruhiger, gleichmäßiger Lauf der Energieführungskette entlang der Führungsrinne gewährleistet ist.

Diese Aufgabe wird, ausgehend von einer Energieführungskettenanordnung mit den eingangs genannten Merkmalen, dadurch gelöst, dass die Laufrollen mit ihren Achsen beidseitig in mindestens einer im Querschnitt U-förmigen Trägerschiene gelagert sind, die Laufrollen einen Durchmesser aufweisen, der kleiner ist als der Abstand benachbarter Schwenkachsen der Kettenglieder, und dass der Abstand der Achsen aufeinander folgender Laufrollen kleiner ist als der Abstand benachbarter Schwenkachsen der Kettenglieder. Durch diese Anordnung der Laufrollen ist gewährleistet, dass die jeweiligen Kettenglieder entlang ihres Laufwegs auf den Rollen in jeder Lage immer durch mindestens zwei Laufrollen abgestützt sind. Dies bedeutet wiederum, dass dann, wenn das Kettenglied eine Laufrolle verlässt, bereits eine weitere Laufrolle zur Unterstützung dieses Kettenglieds zur Verfügung steht. Durch die sich dadurch ergebende sehr große Anzahl an Laufrollen entlang des Verfahrwegs der Energieführungskette wird das Gewicht der Kette auf eine größere Anzahl von Laufrollen verteilt, was wiederum dazu führt, dass die einzelnen Rollen weniger beansprucht werden oder aber die einzelnen Rollen für eine geringere Belastung ausgelegt werden können; hieraus folgt, dass, obwohl eine größere Anzahl an Laufrollen eingesetzt werden muss, eine Führungsrinne, die mit solchen Laufrollen ausgestattet ist, mit Kosten verbunden ist, die möglicherweise geringer sind als eine Führungsrinne, bei der die Laufrollen unter einem größeren Abstand voneinander beabstandet sind.

Die Laufrollen können eine solche Länge aufweisen, dass sie sich über die gesamte Breite der Kettenglieder der Energieführungskette erstrecken. Bevorzugt werden solche Laufrollen in einer U-förmigen Rinne aufgenommen, in der die Achse der jeweiligen Laufrolle an den beiden Seitenwänden der Rinne gelagert ist.

Bevorzugt wird die Führungskette durch zwei im Querschnitt U-förmige Trägerschienen, in denen jeweils Laufrollen gelagert sind, die jeweils einer Laschenseite zugeordnet sind, geführt. Diese U-förmigen Trägerschienen können als vorkonvektionierte Schienenteile, beispielsweise in Längen von ein paar Metern, bereitgestellt werden, um daraus Führungsschienenanordnungen zusammenzustellen, die den baulichen Gegebenheiten angepasst sind. Auch ist es möglich, diese jeweiligen mit Rollen ausgestatteten U-förmigen Trägerschienen so weit voneinander zu beabstanden, dass sie der Breite der Kettenglieder der eingesetzten Energieführungskette angepasst sind und die jeweiligen Laschenteile unterstützen.

Die angegebenen Rollenanordnungen können auch in Verbindung mit Gleitteilen, die auf die Kettenglieder aufgesetzt sind, verwendet werden. Wenn auf den jeweiligen Laschenteilen der jeweiligen Kettenglieder hierzu auf deren Oberseite, aus Sicht des Untertrums gesehen, jeweils mindestens ein Gleitteil angeordnet ist, so dass der Obertrum auf dem Untertrum auf diesen Gleitteilen gleitet, werden die Achsen aufeinander folgender Laufrollen kleiner als die Länge eines den Kettengliedern zugeordneten Gleitteils beabstandet. Hierdurch wird in jeder Lage der Kettenglieder das jeweilige dem Kettenglied zugeordnete Gleitteil durch mindestens zwei Laufrollen unterstützt.

Vorzugsweise sollten die Laufflächen benachbarter Laufrollen zwischen 1 und 2 mm beabstandet sein; hierdurch ist eine maximale Anzahl von Laufrollen entlang des Laufwegs der Kettenglieder möglich. Auch sollten die Laufrollen einen Durchmesser aufweisen, der kleiner ist als die Länge zwischen den benachbarten Achsen der Kettenglieder. Falls Gleitteile eingesetzt werden, sollten die Laufrollen einen Durchmesser aufweisen, der kleiner ist als die Länge eines Gleitteils.

Bevorzugte Durchmesser der Laufrollen liegen bei 20 bis 30 mm, so dass der Laufweg der Energieführungskette entlang der Rinne dicht mit kleinen Laufrollen bestückt werden kann, wodurch sich, trotz der großen Anzahl der Laufrollen, ein sehr ruhiger Lauf der Energieführungskette ergibt.

Wie bereits erwähnt, kann (können) die U-förmige(n) Trägerschiene(n) mit den darin angeordneten Laufrollen vorkonvektionierte Teile sein, die in eine rinnenartige Führung eingesetzt werden. Hierdurch ist ein schneller Aufbau beliebig langer Führungsanordnungen, auch auf die unterschiedlichen Breiten der Energieführungsketten abgestimmt, möglich.

Die U-förmige(n) Trägerschiene(n) kann (können) aus Blech gekantet werden.

Der eine Schenkel der im Querschnitt U-förmigen Trägerschiene kann zumindest einen Teil einer Seitenwand der rinnenartigen Führung bilden, so dass sich ein einfach herzustellender und kostengünstiger Aufbau ergibt.

Vorzugsweise sind die Laufrollen aus einem Kunststoffmaterial gebildet.

Ein bevorzugtes Material für die Laufrollen ist ein Polyethylen-(PE)-Material.

Durch die große Anzahl der eingesetzten Laufrollen können solche Laufrollen verwendet werden, die mit der Achse einen einteiligen Körper bilden, insbesondere auch solche, die aus einem Kunststoffmaterial gefertigt sind.

Um eine noch größere Laufruhe zu erzielen, sollten die Laufflächen der Laufrollen eine Laufflächenschicht aufweisen, die aus einem Elastomer aufvulkanisiert ist.

Weitere Merkmale und Vorteile der Erfindung ergeben sich aus der nachfolgenden Beschreibung von Ausführungsbeispielen anhand der Zeichnung. In der Zeichnung zeigt
- Figur 1: eine perspektivische Ansicht einer Führungsrinne, wobei nur das erste Kettenglied in dem rechten Teil der Führungsrinne gezeigt ist, während in dem linken Teil der Führungsrinne die Laufrollen zu sehen sind,
- Figur 2: eine Draufsicht auf die Anordnung der Figur 1 aus Richtung des Sichtpfeils II in Figur 1,
- Figur 3: eine schematische Darstellung einer Führungsrinne mit zwei Laufrollen-Reihen,
- Figur 4: eine Ansicht der Anordnung der Figur 3 aus Richtung des Sichtpfeils IV in Figur 3,
- Figur 5: eine mit der Figur 3 vergleichbare Darstellung, allerdings mit einer gegenüber der Ausführungsform der Figur 3 geänderten Laufrollenanordnung,
- Figur 6A: eine perspektivische Ansicht einer weiteren Führungsrinne, vergleichbar mit derjenigen der Figur 1, bei der geänderte Laufrollen eingesetzt sind,
- Figur 6B: eine Ansicht der Anordnung der Figur 6A aus Richtung des Sichtpfeils VIB in Figur 6A, und

- Figur 7: eine Seitenansicht einer Führungskette, die den Übergang des Obertrums der Führungskette von einem Gleiten oberhalb des Untertrums auf ein Rollen entlang der Laufrollen darstellt, unter Einsatz einer Anordnung eines Aufbaus der Führungsrinne, wie sie beispielsweise in Figur 1 oder in Figur 6A gezeigt ist.,

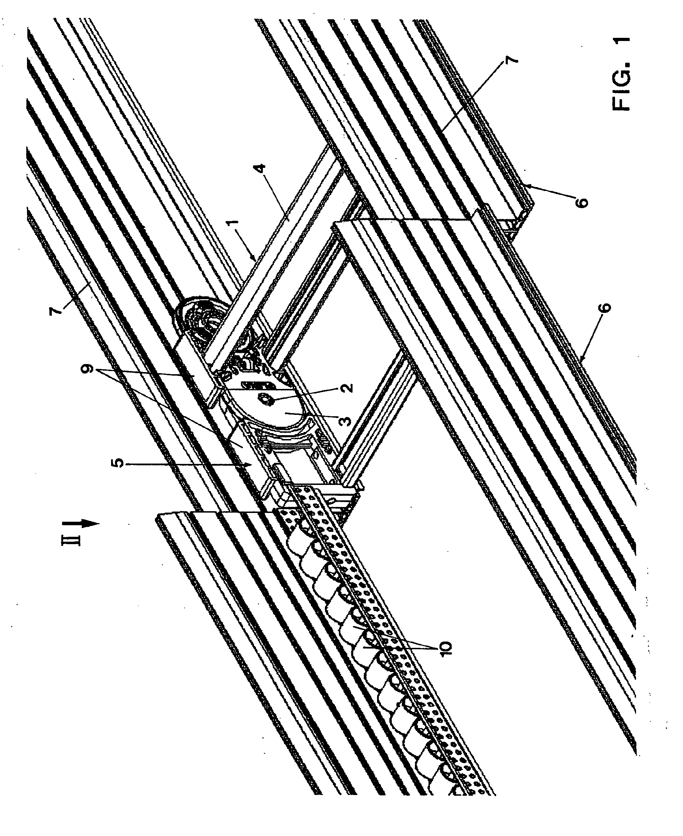

Energieführungsketten, oder auch nur Führungsketten genannt, sind aus einzelnen Kettengliedern 1 zusammengesetzt, wobei die einzelnen Kettenglieder 1 gelenkig miteinander an ihren seitlichen Laschenteilen 2 über Gelenke 3 verbunden sind. Ein solches Kettenglied 1 ist in Figur 1 gezeigt. Die Laschenteile 2 sind über Querstege 4 an der Oberseite und der Unterseite verbunden, so dass sich zwischen diesen Querstegen 4 und den Laschenteilen 2 ein Hohlraum ergibt, entlang dem flexible Leitungen von einem Festanschlusspunkt zu einem beweglichen oder verfahrbaren Abnehmer hin geführt werden können. Ein solcher Festanschlusspunkt ist in Figur 1 durch einen Halter 5, der in der Art eines Kettenglieds aufgebaut ist, gebildet.

Die Kettenglieder 1 der Führungskette werden durch eine rinnenartige Führung 6 geführt, die eine linke und eine rechte Seitenwand 7 umfasst.

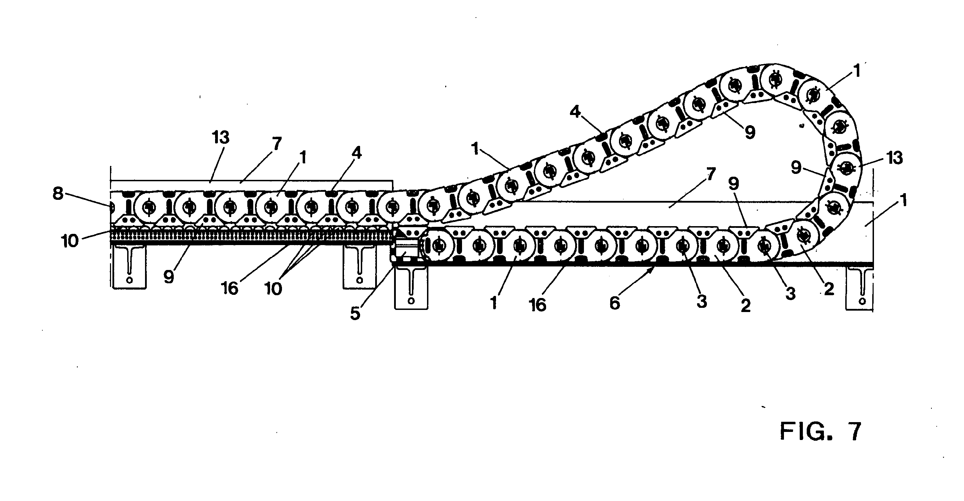

Wie in Figur 7 schematisch dargestellt ist, legt sich, je nach Position eines mit dem Ende der Führungskette, das mit dem Bezugszeichen 8 bezeichnet ist, verbundenen Abnehmers, die Führungskette um und läuft dann oberhalb des unteren Teils der Führungskette, der als Untertrum bezeichnet wird, wobei dieser oben liegende Teil der Führungskette als Obertrum bezeichnet wird. Wenn der Abnehmer 8 über den Festanschlusspunkt (gebildet durch den Halter 5) hinaus läuft, wird der Obertrum auf der sich daran anschließenden rinnenartigen Führung 6 geführt, der, entsprechend den noch nachfolgend beschriebenen Ausführungsformen, Rollen aufweist.

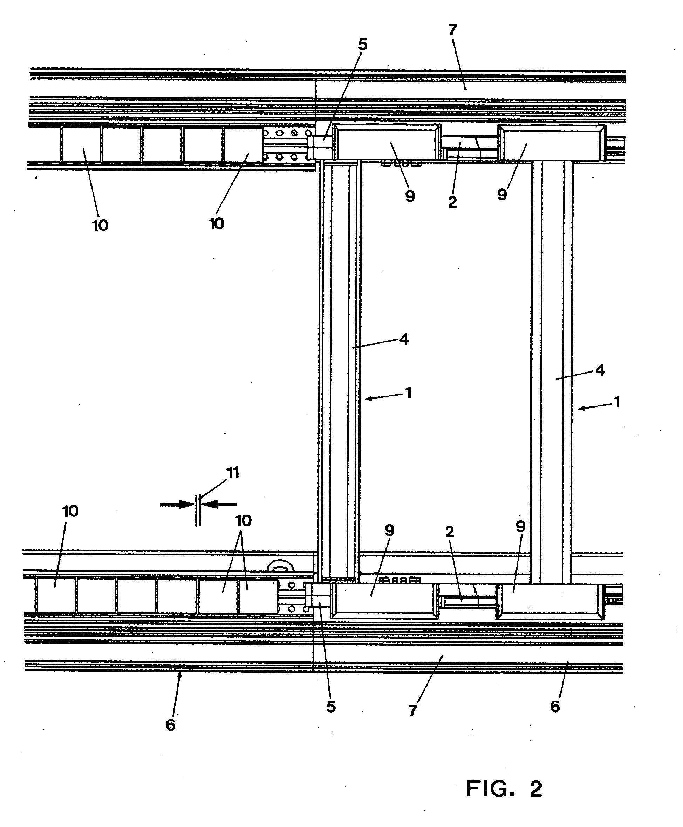

Wie die Figuren 1 und 2, aber auch die Figur 7, zeigen, ist an der Oberseite der Kettenglieder 1, aus Sicht auf den Obertrum gesehen, jeweils ein Gleitteil 9 vorhanden, das, wie die Figur 1 zeigt, an dem Laschenteil 2 befestigt ist. So lange der Obertrum oberhalb des Untertrums geführt wird, gleitet der Obertrum mit seinen Gleitteilen 9 auf den Gleitteilen des Untertrums. In dem Bereich, in dem der Obertrum über den Halter 5 und damit den Festanschlusspunkt hinaus läuft, werden die Gleitteile 9 des Obertrums auf Laufrollen 10 geführt; die Laufrollen 10 sind in der rinnenartigen Führung 6 mit ihrer oberen Lauffläche so angeordnet, dass die Ebene der Oberseiten der Laufrollen 10 mit der Ebene, die durch die Gleitteile 9 des Untertrums aufgespannt wird, übereinstimmt.

Wie anhand der Figuren zu erkennen ist, weisen die einzelnen Laufrollen 10 einen relativ kleinen Durchmesser auf und sind unmittelbar nebeneinander positioniert. Der Abstand zwischen benachbarten Laufrollen 10, in Figur 1 mit dem Bezugszeichen 11 bezeichnet, sollte so gering wie möglich sein, d. h. er kann im Bereich von 1 mm liegen, Für die Größe und damit die Anzahl der Laufrollen pro Längeneinheit sind die Abmessungen der auf der Führungskette eingesetzten Gleitteile 9 wesentlich. Der Durchmesser einer Laufrolle 10 ist so zu wählen, dass er geringer als die halbe Länge der Gleitteile 9 ist. Mit dieser Dimensionierung der Gleitteile 9 ist gewährleistet, dass in jeder Position der Führungskette die einzelnen Gleitteile 9 entlang ihres Laufwegs durch mindestens zwei Laufrollen 10 unterstützt sind; dieser Effekt ist anhand der Figur 7 zu erkennen. Anhand der Figur 7 ist zu sehen, dass mit den dort gezeigten Gleitteilen 9 und den verwendeten Laufrollen 10 in bestimmten Positionen die Gleitteile 9 durch jeweils drei Laufrollen 10 unterstützt werden. Es wird somit der Effekt erzielt, dass die Lücken zwischen benachbarten Gleitteilen 9 benachbarter Kettenglieder 1 ausreichend überbrückt werden.

Falls die Energieführungskette 1 keine Gleitteile 9 aufweist, sollten die Laufrollen einen Durchmesser sowie einen Abstand der Achsen aufeinander folgender Laufrollen haben, die kleiner als der Abstand benachbarter Schwenkachsen 3 der Kettenglieder 1 sind. Hierdurch werden Übergangsstellen zwischen den Kettengliedern so überbrückt, dass eine gleichmäßige Stützung der Kettenglieder erfolgt und kein unruhiger Lauf der Kette hervorgerufen wird.

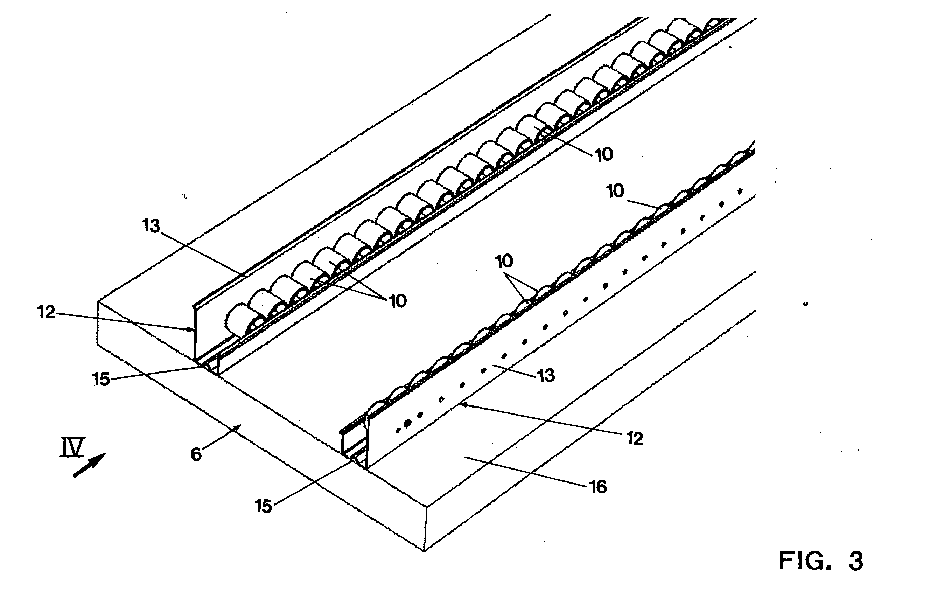

In den Figuren sind zwei mögliche Ausführungsformen einer Anordnung der Laufrollen 10 gezeigt. In den Ausführungsformen, wie sie in den Figuren 1 bis 5 gezeigt sind, sind zwei Reihen aus Laufrollen 10 parallel zueinander angeordnet; die Laufrollen 10 einer Reihe sind in einer U-förmigen Trägerschiene 12 gehalten. Der jeweils äußere Schenkel 13 der Trägerschiene 12 ist in einer Höhe ausgeführt, dass er über die Lauffläche der Laufrollen 10 hoch steht und dadurch gleichzeitig eine seitliche Begrenzung für die auf den Laufrollen 10 rollende Führungskette (Obertrum) bildet.

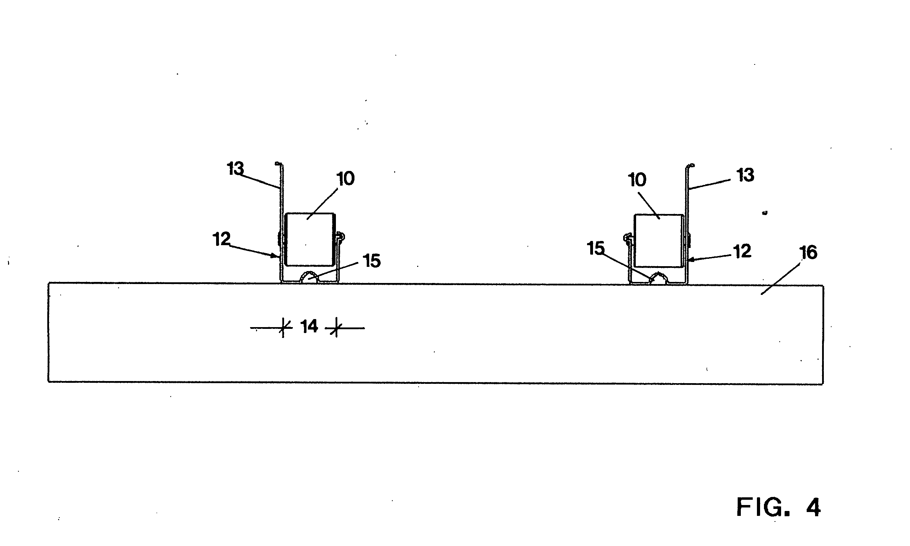

Die Breite der einzelnen Laufrollen 10, in Figur 4 mit dem Bezugszeichen 14 bezeichnet, sollte zumindest so groß sein, dass die Gleitteile 9 der Kettenglieder 1, oder in Fällen, in denen keine Gleitteile 9 vorgesehen sind, die entsprechende Kante der Laschenteile 2, abgestützt werden.

Bei den Laufrollen 10 kann es sich um einfache Kunststoff-Laufrollen, beispielsweise aus einem Polyethylenmaterial, handeln, bei denen gegebenenfalls unmittelbar die Achsen oder Lagerzapfen angeformt sind. Solche Kunststoff-Laufrollen sind kostengünstig in den unterschiedlichsten Größen erhältlich. Auch sind nur einfache Lager für die Laufrollen 10 in den Schenkeln der U-Trägerschiene 12 erforderlich, die eingeformte oder eingepresste Vertiefungen sein können. Die U-förmige Trägerschiene 12 kann beispielsweise aus einem dünnen Blech gekantet werden, gegebenenfalls mit verstärkenden Sicken 15, wie eine solche, die im Bodenbereich der Trägerschiene 12 geformt ist.

Um die Laufruhe zusätzlich zu verbessern, können die Laufflächen der Laufrollen 10 mit einer Beschichtung aus einem Elastomer versehen sein.

Wie die Figur 4 zeigt, können die U-förmige Trägerschienen 12 unmittelbar auf einer Unterlage 16 in einem für die aufzunehmende Führungskette erforderlichen Abstand zueinander montiert werden.

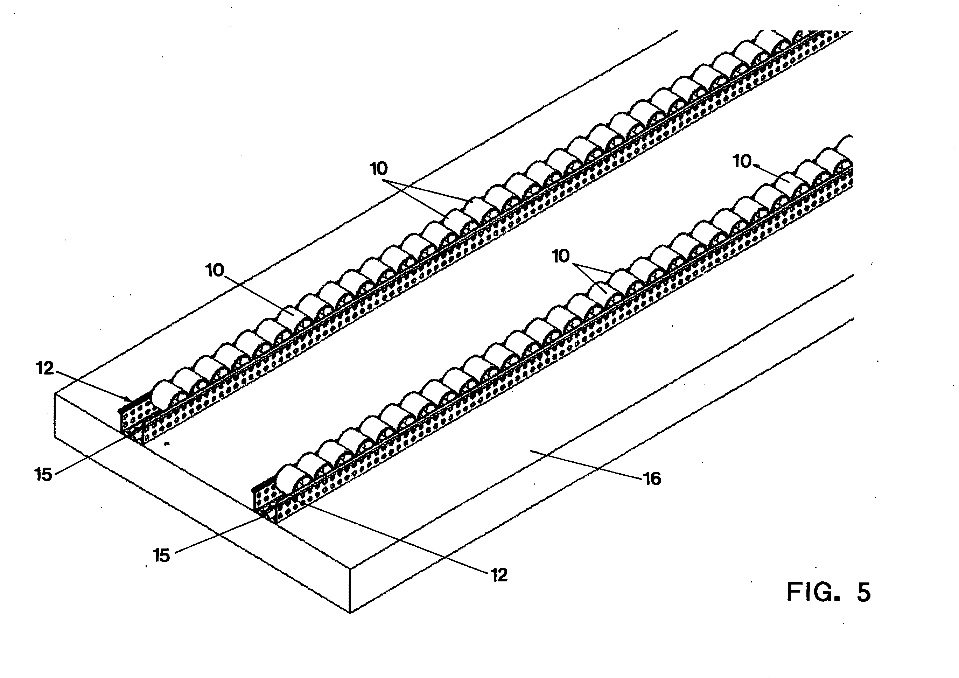

In Figur 5 ist eine Anordnung mit zwei U-förmigen Trägerschienen 12 gezeigt, die mit derjenigen der Figur 4 vergleichbar ist. Allerdings sind bei der Ausführungsform der Figur 5 keine seitlich erhöhten äußeren Schenkel 13, wie in der Ausführungsform der Figur 4, vorgesehen. Die U-förmigen Trägerschienen 12 der Ausführungsform der Figur 5 sind dann solche, die zwischen Seitenteilen 7 der rinnenartigen Führung 6 der Ausführungsform der Figuren 1 und 2 eingesetzt werden.

Wie anhand der Figuren 1 und 5 zu erkennen ist, sind die U-Profile der Trägerschienen 12 sowohl an den Schenkeln als auch an der Bodenfläche gelocht, so dass bei einem Einsatz im Freien Regenwasser ablaufen kann und gegebenenfalls auch Schmutzbestandteile herausgespült werden können.

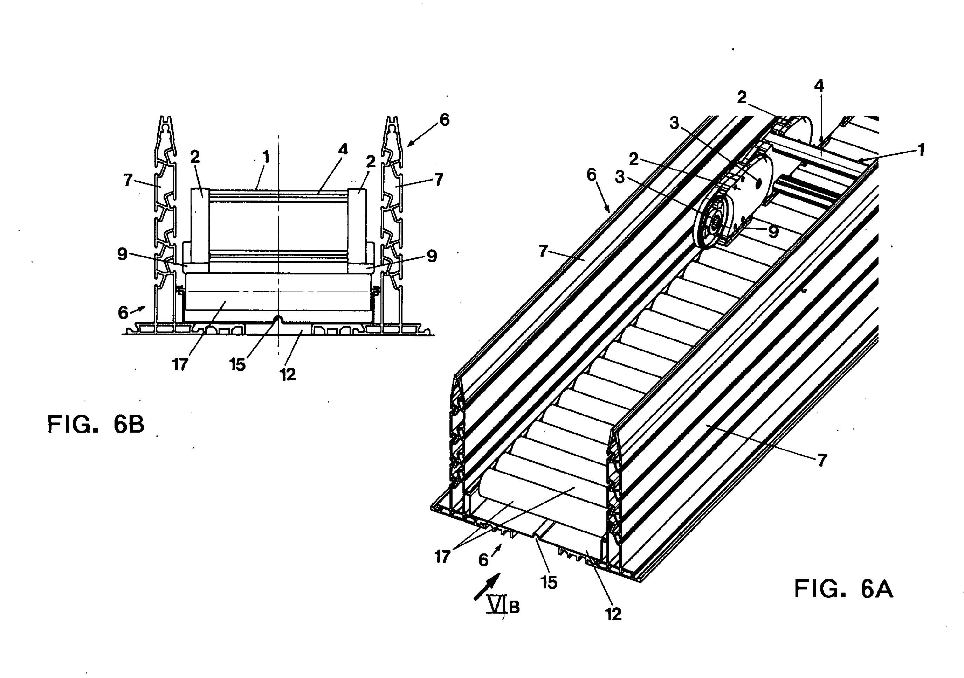

In der Ausführungsform, die in den Figuren 6A und 6B gezeigt ist, sind die Laufrollen 10 der beiden Laufrollen-Reihen der zuvor beschriebenen Ausführungsform durch walzenartige Laufrollen 17 ersetzt, die sich zwischen den beiden Seitenteilen 7 der rinnenartigen Führung 6 erstrecken. Für die Durchmesser dieser Laufrollen 17 sowie deren Beabstandung zueinander gelten die Angaben, die zuvor zu den Laufrollen 10 gemacht wurden. Diese Laufrollen 17 sind ebenfalls in einer U-förmigen Trägerschiene gehalten, die ebenfalls mit dem Bezugszeichen 12 in den Figuren 6A und 6B bezeichnet ist.

## Patentansprüche

1. Energieführungskettenanordnung zur Aufnahme und Führung von flexiblen Leitungen von einem Festanschlusspunkt zu einem beweglichen oder verfahrbaren Abnehmer hin, mit einzelnen gelenkig miteinander verbundenen, eine Führungskette bildenden Kettengliedern, wobei die Kettenglieder jeweils zwei seitliche Laschenteile aufweisen und derart zueinander verschwenkbar sind, dass das eine mit dem Abnehmer verbundene Ende der Führungskette umlegbar ist und zurück in Richtung des Festanschlusspunkts, einen Obertrum darstellend, oberhalb des ruhenden, mit dem Festanschlusspunkt verbundenen Teils der Führungskette, der einen Untertrum darstellt, läuft, und mit einer rinnenartigen Führung, die den Obertrum oberhalb des Untertrums seitlich stützt, und dass der Obertrum dann, wenn er über das Ende der Führungskette in Richtung des Festanschlusspunkts hinausläuft, auf Laufrollen, die den Seitenwänden der rinnenartigen Führung zugeordnet sind, getragen wird, **dadurch gekennzeichnet, dass** die Laufrollen (10; 17) mit ihren Achsen beidseitig in mindestens einer im Querschnitt U-förmigen Trägerschiene (12) gelagert sind, die Laufrollen einen Durchmesser aufweisen, der kleiner ist als der Abstand benachbarter Schwenkachsen der Kettenglieder, und dass der Abstand der Achsen aufeinander folgender Laufrollen (10; 17) kleiner ist als der Abstand benachbarter Schwenkachsen (3) der Kettenglieder (1).

2. Energieführungskettenanordnung nach Anspruch 1, **dadurch gekennzeichnet, dass** die Führungskette auf zwei im Querschnitt U-förmigen Trägerschienen (12), in denen jeweils Laufrollen (10) gelagert sind, die jeweils einer Laschenseite (2) zugeordnet sind, geführt ist.

3. Energieführungskettenanordnung nach Anspruch 1 oder 2, **dadurch gekennzeichnet, dass** auf den jeweiligen Laschenteilen (2) der jeweiligen Kettenglieder auf deren Oberseite, aus Sicht des Untertrums gesehen, jeweils mindestens ein Gleitteil (9) vorhanden ist, so dass der Obertrum auf dem Untertrum auf diesen Gleitteilen (9) gleitet, und dass der Abstand der Achsen aufeinander folgenden Laufrollen (10; 17) kleiner ist als die Länge eines den Kettengliedern (1) zugeordneten Gleitteils (9).

4. Energieführungskettenanordnung nach einem der Ansprüche 1 bis 3, **dadurch gekennzeichnet, dass** die Lauffläche benachbarter Laufrollen (10; 17) zwischen 1 und 2 mm beabstandet sind.

5. Energieführungskettenanordnung nach Anspruch 1 oder 2, **dadurch gekennzeichnet, dass** die Laufrollen (10; 17) einen Durchmesser aufweisen, der kleiner ist als die Länge zwischen den benachbarten Achsen (3) der Kettenglieder (1).

6. Energieführungskettenanordnung nach Anspruch 3 oder 4, **dadurch gekennzeichnet, dass** die Laufrollen (10; 17) einen Durchmesser aufweisen, der kleiner ist als die Länge eines Gleitteils (9).

7. Energieführungskettenanordnung nach einem der Ansprüche 1 bis 6, **dadurch gekennzeichnet, dass** die Laufrollen (10; 17) einen Durchmesser zwischen 20 und 30 mm aufweisen.

8. Energieführungskettenanordnung nach einem der Ansprüche 1 bis 7, **dadurch gekennzeichnet, dass** die U-förmige(n) Trägerschiene(n) (12) mit den darin angeordneten Laufrollen (10; 17) vorkonvektionierte Teile sind, die in die rinnenartige Führung (6) eingesetzt sind.

9. Energieführungskettenanordnung nach einem der Ansprüche 1 bis 8, **dadurch gekennzeichnet, dass** die U-förmige(n) Trägerschiene(n) (12) aus einem Blech gekantet ist (sind).

10. Energieführungskettenanordnung nach einem der Ansprüche 1 bis 9, **dadurch gekennzeichnet, dass** der eine Schenkel (13) der im Querschnitt U-förmigen Trägerschiene (12) zumindest einen Teil einer Seitenwand der rinnenartigen Führung (6) bildet.

11. Energieführungskettenanordnung nach einem der Ansprüche 1 bis 10, **dadurch gekennzeichnet, dass** die Laufrollen (10; 17) aus einem Kunststoffmaterial gebildet sind.

12. Energieführungskettenanordnung nach Anspruch 11, **dadurch gekennzeichnet, dass** die Laufrollen (10; 17) aus einem Polyethylen-(PE)-Material gebildet sind.

13. Energieführungskettenanordnung nach Anspruch 11 oder 12, **dadurch gekennzeichnet, dass** die Laufrolle (10; 17) mit der Achse einen einteiligen Körper bildet.

14. Energieführungskettenanordnung nach einem der Ansprüche 1 bis 13, **dadurch gekennzeichnet, dass** die Laufflächen der Laufrollen (10; 17) eine Laufflächenschicht aufweisen, die aus einem Elastomer aufvulkanisiert ist.
